# EUROPEAN PATENT SPECIFICATION

(11) **EP 1 518 656 B1**
(45) Date of publication and mention of the grant of the patent: **23.08.2006**
(21) Application number: 03425624.8
(22) Date of filing: 26.09.2003
(51) Int. Cl.: B29C 45/14, B29C 45/16, F04B 43/00, F16J 3/02

(54) **Process for making a membrane for fluid-control apparatuses, and membrane made thereby**
Verfahren zur Herstellung einer Membran für Fluid-Beeinflussungsvorrichtungen, und danach hergestellte Membran
Procédé de fabrication d'une membrane pour dispositifs de contrôle d'un fluide, et membrane fabriquée selon ce procédé

(43) Date of publication of application: 30.03.2005
(73) Proprietor: Giardini, Edo, 20030 Correzzana (Milano) (IT); Panzeri, Luca, 23871 Lomagna (Como) (IT)
(72) Inventor: Giardini, Edo, 20030 Correzzana (Milano) (IT); Panzeri, Luca, 23871 Lomagna (Como) (IT)
(74) Representative: Lunati, Vittoriano

(56) References cited:
- EP-A- 0 183 342
- EP-A- 0 721 076
- EP-A- 0 732 501
- EP-A- 1 058 005
- FR-A- 1 355 765
- US-A1- 2002 057 972
- MODERN PLASTICS; HARPER, C.A.: "Modern Plastics Handbook" 2000 , MCGRAW-HILL XP002271941 * page 1.44 - page 1.45 *
- DATABASE WPI Section Ch, Week 199250 Derwent Publications Ltd., London, GB; Class A17, AN 1992-333824 XP002271942 & JP 04 305432 A (MITSUI PETROCHEM IND LTD), 28 October 1992 (1992-10-28)
- PATENT ABSTRACTS OF JAPAN vol. 009, no. 098 (M-375), 27 April 1985 (1985-04-27) & JP 59 222676 A (NIPPON DENSO KK), 14 December 1984 (1984-12-14)

## Description

The invention relates to a process for making a membrane for fluid-control apparatuses, and the membrane obtained with said process.

The membrane or diaphragm is for example of the type to be used in pumps, compressors, pressure regulators, volume meters, valves.

It is known that membranes of the above kind are provided in many cases for delivering, metering or directing fluids such as liquids that may also be of the corrosive and/or polluting type.

Therefore, these membranes must be chemically resistant to these fluids and simultaneously they must be relied on to last a long time and be flexible and strong.

Said different requirements are met in most cases by arranging membranes of the stratified type and having a first layer of a material resistant to chemical agents and a second layer of a material of appropriate mechanical strength, duration and flexibility.

FR-A-1 355 765 discloses a membrane of this type wherein the first layer is a film of plastic material selected from polyolefines, polyamides, polyesters or other plastic materials, and the second layer is made of an elastomer like natural or synthetic rubber or a silicone type rubber. The film of plastic material is first shaped to the form of the face of the membrane to be protected and is then applied to the membrane by gluing. However, the film may also be applied by other methods such as overmoulding.

EP-A-0 732 501 discloses a sensing membrane having the capability of indicating wear conditions prior to failure of the membrane. The membrane comprises at least one layer typically made of a fluorinated resin such as polytetrafluoroethylene (PTFE) marked with the trademark Teflon® and available from Du Pont.

Polytetrafluoroethylene (PTFE) is preferred due to its great capability of resisting to chemical agents of various types, its tendency not to adhere to the treated materials and fluids and also due to the very reduced coefficient of friction it shows towards the treated fluids.

The second layer is made of various materials and is generally set with a greater thickness than the first material. Said material is typically an elastomer like Neoprene or Viton®, but may also be a thermoplastic elastomer like a polyurethane elastomer or a polyamide elastomer.

The two layers are disposed in side by side relationship and made to adhere to each other: the first layer is placed on the membrane side that is in contact with the fluid to control, the second on the other side that is protected by the first one.

To cause the layers to adhere to each other, an adhesive is previously applied to the contacting surface of the layer of PTFE. The layer of elastomer and the layer of PTFE are then assembled into a pre-form and moulded to a desired shape. If a thermoplastic elastomer is used instead of an uncured elastomer like Neoprene or Viton®, an injection moulding step may take the place of the compression moulding step, as also disclosed in EP-A-1 058 005.

The above mentioned known art enables membranes or diaphragms to be made of appropriate functional features, but it has some important drawbacks.

In fact, preparation of said layers is arduous and very expensive: they must all be preformed or shaped in a precise manner and joined together.

In particular, preforming of the first layer, selected for being adapted to chemically resist reactive/corrosive fluids, and above all gluing of the first layer to the second layer through special adhesives or bonding agents, is difficult and expensive.

In fact, it is necessary to join materials that are very different from each other, although they all consist of plastic materials, and it is necessary to do it without worsening or altering the physical and chemical features of same.

In real terms, in order to succeed in joining the polytetrafluoroethylene (PTFE) or Teflon® - that is distinguishable due to its tendency not to adhere to other materials - to another plastic material, special adhesives or bonding agents are required - Chemlock® available from Lord Corporation of Eire, for example - as well as special procedures to join the layers in the presence of the bonding agent and preventing the same from losing their physical and chemical properties. Costs for these operations are so high that attempts have been also made to avoid gluing and merely dispose the layers close to each other.

In fact, some membranes have a first layer of Teflon ® (PTFE) that is merely disposed tightly close to or pressed against another plastic material.

It is however apparent that a membrane with the layers joined together can be relied on to a greater extent in terms of reliability and mechanical duration and in particular reduces seepage of the treated fluid between the membranes and therefore corrosion of the second layer that is unsuitable to resist chemical agents or polluting substances.

The material of the first layer may also be a UHMWPE (ultra high molecular weight polyethylene) (MODERN PLASTICS; HARPER, C. A.: "Modern Plastics Handbook" 2000, McGraw-Hill XP002271941), wherein the high molecular weight imparts outstanding abrasion resistance and other excellent mechanical properties. UHMWPE is often processed as a fine powder that can be ram extruded or compression moulded, although an injection-moulding grade is marketed by Hoechst.

Further, EP-A-0 183 342 discloses a diaphragm valve in which the membrane is made of a single layer of material injection-moulded on a rigid pressure element in form of a shaped piston head. The portion of the membrane connected to the rigid pressure element is thus made rigid with this body, so that the flexing properties of the membrane are greatly reduced.

There is therefore an unresolved technical problem consisting in how to make reliable membranes at low costs.

Under this situation the technical task underlying the present invention is to conceive a process and a membrane capable of obviating the mentioned drawbacks and solving said technical problem.

The technical task is achieved by a process for making a membrane for fluid-control apparatuses and by a membrane obtained with said process, as claimed in the appended independent Claims 1 and 9, respectively.

Preferred embodiments are recited in the dependent Claims.

Further features and advantages of the invention will become more apparent from the following detailed description of some preferred embodiments of the invention, with reference to the accompanying drawings, in which:
**Fig. 1** shows a first step of carrying out the process in accordance with the invention, with insertion of a first laminar and not preformed plastic material between a mould and a countermould in an open position;
**Fig. 2** shows a second step of the process, in which the mould and countermould are closed on the first plastic material;
**Fig. 3** shows a third step in which a second plastic material is injected;
**Fig. 4** is a further embodiment of the process in a first step during which a first layer is moulded;
**Fig. 5** shows a subsequent step to that seen in Fig. 4;
**Fig. 6** shows a further step, subsequent to that in Fig. 5;
**Fig. 7** is a section view of a membrane made up of two layers obtained with the process shown in Figs. 1 to 3, provided with a central opening;
**Fig. 8** is a section view of a membrane similar to that in Fig. 7 but consisting of three layers and obtained with the process seen in Figs. 4 to 6;
**Fig. 9** shows a two-layer membrane provided with a substantially flattened shape and centrally having a metal insert; and
**Fig. 10** shows a substantially cup-shaped two-layer membrane.

In accordance with the invention, it is provided a process comprising a plurality of steps carried out after arrangement of at least one moulding unit 1 including at least one mould **1a** and a related countermould **1b** defining at least one moulding cavity **2** between each other.

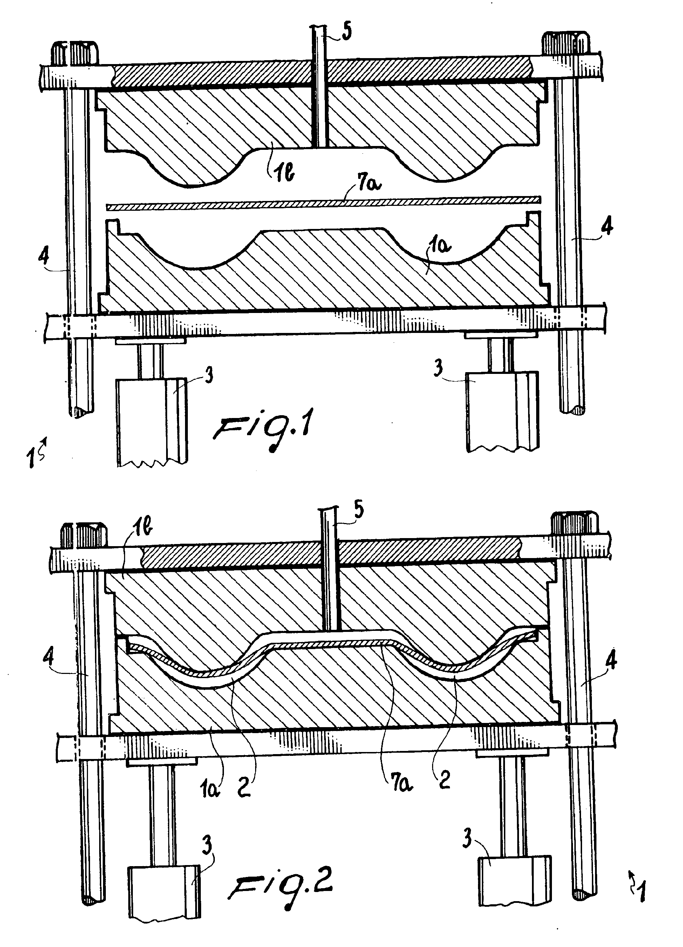

Figs. 1 and 2 diagrammatically show a moulding unit 1 in which movements between mould 1a and countermould 1b close to and away from each other are driven by pistons **3** and guided by dowel and guide pins **4**.

At least one first injector **5** is provided to introduce plastic material in a melted state into the moulding cavity 2 when the mould 1a and countermould 1b are in a closed position.

In the preferred embodiment shown in Figs. 1 to 3 the moulding cavity 2 has substantially fixed sizes and shape corresponding to the final sizes and shape of the membrane to be made. Said membrane taken as a whole is generally denoted at **6** while **6a** specifically identifies the membrane obtained with the process referred to in Figs. 1 to 3.

The membrane or diaphragm 6 is of the stratified type as it comprises several layers of plastic material.

In accordance with a step of the process, at least one first plastic material is provided to be inserted in the moulding cavity 2, which plastic material is of a type chemically resistant to the fluid to be treated, i.e. capable either of resisting the chemically reactive elements present in the fluid - generally a liquid - that the membrane 6 must control or treat, or of withstanding without damages the polluting substances present in the fluid or the dirtiness resulting from treatment of staining fluids.

Said first plastic material is in fact the material designed to make at least one first layer **7** of the membrane 6 that is directly set in contact with said fluid.

The first plastic material is selected from special thermoplastic materials having features of resistance to chemical agents: polyolefines, polyamides, polyesters, vinyl resins.

Preferably a polyolefine such as polyethylene (PE) is selected and from the great variety of polyethylenes a high density polyethylene (HDPE) with an ultra high molecular weight (UHMWPE) is selected.

The high density polyethylene (HDPE) has density values δ greater than 0.940 grams per cubic centimetre and it consists of mainly linear polymethylene chains (-CH₂-CH₂-CH₂-CH₂-).

It has a great chemical inertia and in particular is chemically resistant to acids, alkaline solutions, saline solutions, water, alcohol, esters, oil, petrol. At room temperature practically it is not attackable by any reactant and is not soluble in any solvent. Only above 90°C it can be attacked by aromatic and chlorinated solvents.

In addition, it also has optimal mechanical, technical and electric properties. Furthermore the high density polyethylene having an ultra high molecular weight (UHMWPE i.e. as above said "Ultra High Molecular Weight Poly-Ethylene") is a particular high density polyethylene having a molecular weight higher than two million grams per mole, four or more million grams per mole for example.

Among other things, it is distinguishable for an exceptional resistance to wear and a very low coefficient of friction by sliding.

The very low friction coefficient is important in order to ensure the maximum efficiency in fluid control and is similar to that of polytetrafluoroethylene (PTFE) or Teflon® that, as well known, is minimum.

HDPE - UHMWPE polyethylene in addition has a chemical resistance still increased with respect to that of high density polyethylene with medium molecular weight (included between fifty thousand and five hundred thousand grams per mole, for example).

It also has a maximum dimensional stability up to temperatures very close to the melting temperature and a high viscosity in the melted state as well.

Presently made of high density polyethylene with an ultra high molecular weight are for example ski soles, bearings, gears, guides for moving mechanical elements.

HDPE - UHMWPE polyethylene can be obtained by extrusion, exfoliation, sintering of powders, by casting, above all it can also be injection moulded.

In a subsequent step of the process of the present invention it is provided to inject at least one second plastic material of a type adapted to be moulded by injection into the moulding cavity 2 directly, i.e. without interposition of any adhesives or bonding agents, onto the first plastic material, so as to form at least one second layer **8** substantially defining the mechanical performance and duration in time of membrane 6.

The second plastic material is in fact selected depending on its properties of flexibility, mechanical resistance and resistance to fatigue and in addition it is preferably of such an amount as to form a second layer 8 of greater thickness than the first layer 7.

The capacity of resistance to chemical agents is not important because under operating conditions the second layer 8 is protected by the first layer 7.

The second plastic material consists of a thermoplastic elastomer (TPE) selected from santoprene®, pebax®, hytrel®, finaprene®, elastollan®, pibiflex®. Preferably, the selected thermoplastic elastomer (TPE) is santoprene®, trademark of the Advanced Elastomer Systems.

Santoprene® is a thermoplastic rubber that is distinguishable for its optimal mechanical properties and its easy workability, in particular because it can be easily moulded by injection.

The injection phase of the thermoplastic elastomer (TPE) directly onto the first plastic material without application of an adhesive achieves important results.

In the case shown in Figs. 1 to 3, the first layer 7 is partly preformed out of the moulding cavity 2, i.e. before being inserted into the moulding cavity 2. It is then inserted in the pre-formed shape when the mould 1 a and countermould 1b are in a substantially open position. In particular, the first layer is preformed out of said moulding cavity in the form of a sheet or film or plate 7a substantially flattened and not shaped.

Under this situation the plate 7a is automatically thermoformed by the injection step of the second plastic material, so as to become the first layer 7 with its final shape.

However it is not to be excluded that the second layer 8 be fully shaped before being inserted into the moulding cavity 2.

At all events, formation of the second layer 8 by injection of the second plastic material onto the first one according to the invention gives rise to a perfect welding between the two layers 7 and 8.

Practically the first and second layers, 7 and 8, are made definitively integral with each other in the absence of intermediate gluing means.

The second plastic material is injection-moulded directly onto an adhesive-free surface of the first plastic material, and the second layers is joined adhesive-less to the first layer 7.

Injection of the second plastic material onto the first is carried out following appropriate modalities compatible with a substantial integrity of the first plastic material.

In particular, injection of the second plastic material, obviously in a melted state, is carried out in a manner adapted to bring the first plastic material to temperatures that on an average are close to and lower than the melting temperature. This does not necessarily mean that the injection temperature should be very reduced: it is for example necessary to consider the moulding conditions that can be varied, the thickness of the layers and the cooling speed of the plastic material in the moulds.

Said first plastic material is then characterised by a high viscosity in the melted state and in any case it does not heat in a uniform manner.

In addition an appropriate heating of the surface in contact with the second plastic material is wished in order to join the two layers in a stable manner.

The optimal temperatures and moulding conditions in any case can be easily identified by means of normal moulding tests well known by all technicians in the sector.

In carrying out the process shown in Figs. 4 to 6, a mould 1a and a countermould 1b are arranged that are mutually movable in a plurality of moulding positions, so as to form a moulding cavity 2 of varying volume.

For example, the mould and countermould are relatively movable between a first position (Fig. 4) at which the moulding cavity 2 substantially has the shape and sizes of the first layer 7 alone, and a second position (Fig. 5) at which the moulding cavity 2 has more extended sizes.

The mould and countermould displacement is obtained through pistons 3. Under this situation the first plastic material too is inserted by injection into the moulding cavity 2 by at least one second injector **9** and therefore the first layer 7 too is integrally made in the moulding cavity 2, which will bring about a further simplification in the operations.

The second plastic material forming the second layer 8 is then injected after displacement of mould 1a and countermould 1b to said second position.

In this way a membrane similar to and made with the process of Figs. 1 to 3 and

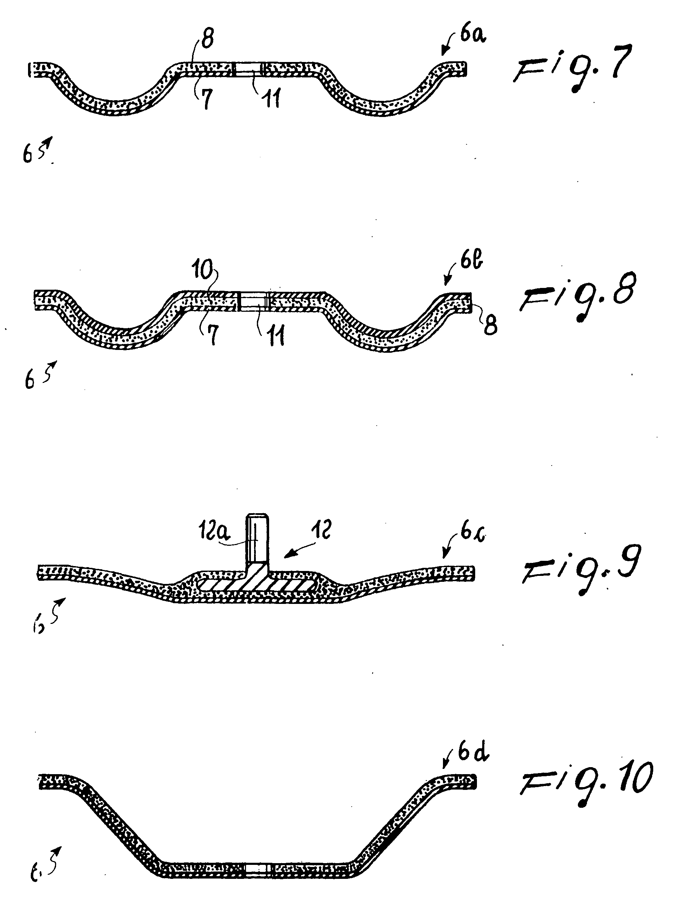

Fig. 7 and identified by 6a is obtained.

Depending on the final features wished for the membrane, the first layer can be made by means of a plate 7a inserted in the moulding cavity 2 when mould 1a and countermould 1b are in a substantially open position (Fig. 1) or alternatively the first layer 7 can be formed by injection (Fig. 4).

For example, in the case shown in Figs. 1 to 3, the first layer 7 can be also very thin, in the order of some hundredths of a millimetre, when plate 7a is practically a film. The second layer 8 too can be very thin, in the order of some tenths of a millimetre.

With the embodiment shown in Figs. 4 and 5 the minimum sizes of the layers are preferably bigger, to facilitate the injection operations, but they are always very reduced, in the order of one millimetre for example for the first layer 7 and some millimetres for the second layer 8.

Bigger sizes than the minimum ones can be selected with the greatest freedom and the process in accordance with the invention has a great flexibility and enables membranes adapted to the most different applications to be made.

In fact, the thickness of both layers 7 and 8 can be widely and readily varied and diversified, and the features of the plastic materials employed can be conveniently selected in view of the foreseen applications.

In addition, by providing a mould 1a and countermould 1b mutually movable, a protected membrane **6b** formed of three layers and shown in Fig. 8 can also be made, in which the thermoplastic elastomer layer (TPE) is held between two thin layers of HDPE - UHMWPE polyethylene, or other materials from those listed, to protect said thermoplastic elastomer (TPE) on both sides.

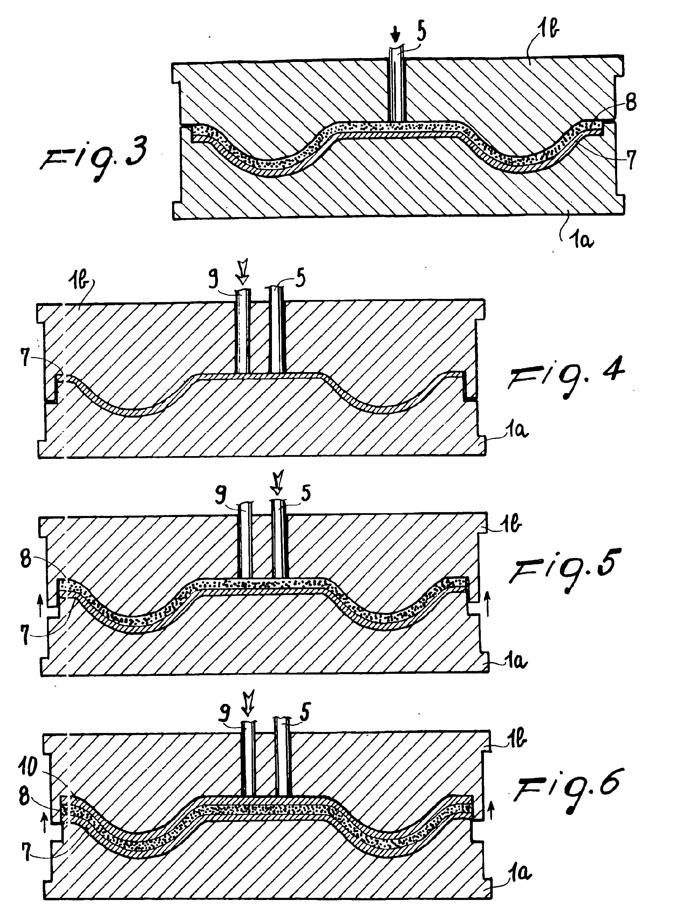

It is sufficient to provide a third step for the movable moulds, in which step mould 1a and countermould 1b are further separated from each other after injection moulding of the second layer 8, and then repeat the injection moulding operation (Fig. 6) of the first plastic material to form a third layer **10** as well.

This situation is of immediate accomplishment due to the immediate repetition of the procedures for injection of the first layer 7 and reuse of the first plastic material, although the third layer 10 could also be made of a plastic material different from the first one.

A protected membrane 6b can be adapted to avoid assembling problems to a user, when the membrane has a flattened shape or when on both sides of same the presence of seepage of corrosive substances is possible.

As highlighted in the figures, the membrane 6 made with the process in accordance with the invention can have various shapes.

As shown in Figs. 7 to 10, for example, i.e. a first membrane 6a formed of two layers and having an annular convexity (Fig. 7), a protected membrane **6b** formed of three layers (Fig. 8) or also a flattened membrane **6c** (Fig. 9) or a cup-shaped membrane **6d** (Fig. 10).

The first membrane 6a shown in section in Fig. 7 is obtained with a moulding process as shown in Figs. 1 to 3, or the moulding process shown in Figs. 4 and 5, whereas the protected membrane 6b shown in section in Fig. 8 is obtained by the injection moulding process shown in Figs. 4 to 6, still with arrangement of a central hole **11**.

The central hole 11 can be already made directly in the moulding process and its function is to enable passage, coaxially with the membrane, of a stem for operation of the latter. Said drive stem can be fastened for example by means of plates tightening the membrane at opposite faces thereof.

The shape shown in Fig.9 on the contrary is of the type including means for engagement with said drive stem: partly buried in the second layer 8 - the one determining the mechanical properties of the membrane - is a mushroom-shaped element **12** provided with a tailpiece **12a** to be fixed for example by screwing to said drive stem.

At all events the membrane comprises at least one first layer 7 of a first plastic material which is resistant against the chemical agents that are present in the fluid to be controlled and at least one second layer 8 of a second plastic material defining the mechanical performance of the membrane and preferably having a bigger thickness than that of the first layer.

The first plastic material forming the first layer is selected from polyolefines, polyamides, polyesters, vinyl resins and preferably and advantageously it is a polyolefine such as high density polyethylene with an ultra high molecular weight (HDPE - UHMWPE).

The second plastic material of the second layer is a thermoplastic elastomer (TPE) to be moulded by injection, and selected from santoprene®, pebax®, hytrel®, finaprene®, elastollan®, pibiflex®. Preferably it is santoprene ®.

In addition, the first and second layers 7 and 8 are directly in contact with each other adhesive-less being mutually integral in the absence of gluing means.

The invention achieves important advantages.

In fact it allows membranes of full liability to be manufactured in a simple manner, in which the layers are perfectly formed and joined together in a stable manner also without use of adhesives or bonding agents.

In particular, high density polyethylene with an ultra high molecular weight (HDPE - UHMWPE) has appeared to be quite satisfactory in terms of chemical resistance to most of the treated fluids, minimum coefficient of friction, duration and mechanical properties.

Above all, choice of the materials, simplicity of the production cycle and absence of gluing means and operations, as well as possibility of completely avoiding thermoforming operations carried out on the layers before the injection-moulding step lead to manufacture of membranes much cheaper as compared with known membranes in which the layers are joined to each other.

There is a great money saving: the new membranes are even ten times less expensive than the membranes where a layer of polytetrafluoroethylene (PTFE) is provided that is joined by special adhesive or gluing means to another plastic material. The production cycle reaches the maximum simplicity and versatility when the moulding cavity is arranged so as to have a varying volume and all layers are directly and fully made and joined to each other in the same moulding cavity.

Then combination of said polyethylene (HDPE - UHMWPE) with a thermoplastic elastomer (TPE) offers the maximum compatibility between the layers and the possibility of forming all layers by injection moulding.

In fact, both plastic materials can be injection moulded, thus making it possible to manufacture the whole membrane within the same moulding cavity.

The invention is susceptible of variations.

For example many layers can be made if the membrane properties are required to be increased.

This operation can be carried out either by inserting several plates 7a in the moulding unit of Fig. 1 for example, or by consecutively moulding several layers in the moulding unit of Fig. 4.

It is then pointed out that in the process in accordance with the invention the physical and chemical features and the thickness of the plastic materials forming the layers can be selected and varied depending on the foreseen uses, so as to always obtain optimal functional features.

For example, it is to be noted that the high density polyethylene itself with an ultra high molecular weight is produced with several different additives and molecular weights and there is also a wide choice in the field of thermoplastic elastomers (TPE).

## Claims

1. A process for making a membrane for fluid control apparatuses, comprising the steps of making at least one first layer (7) of a membrane (6) with a first plastic material chemically resistant to said fluid, making at least one second layer (8) of a second plastic material mainly defining the mechanical performance of said membrane (6), and making said layers (7, 8) integral with each other, wherein said first plastic material is selected from polyolefines, polyamides, polyesters, vinyl resins and said second plastic material is an elastomer,
**characterised in that** said second plastic material is a thermoplastic elastomer (TPE) and **in that** said thermoplastic elastomer (TPE) is injection-moulded directly onto an adhesive-free surface of said first plastic material inserted in a moulding cavity (2) of an injection mould (1a, 1b), thereby forming at least one second layer (8) joined adhesive-less to said first layer (7).

2. A process as claimed in claim 1, **characterised in that** injection-moulding of said second plastic material is carried out at temperatures bringing said first plastic material to average temperatures close to, and lower than, the melting temperature of said first plastic material.

3. A process as claimed in claim 1 or 2, **characterised in that** it comprises a first step of injection-moulding said first layer (7), and a second step of injection-moulding said second layer (8) over said first layer (7).

4. A process as claimed in claim 3, **characterised in that** a third layer (10) of plastic material is injection-moulded directly on said second layer (8).

5. A process as claimed in one or more of the preceding claims, **characterised in that** said first plastic material is polyethylene (PE), preferably a high density polyethylene (HDPE) with an ultrahigh molecular weight (UHMWPE).

6. A process as claimed in claim 1, **characterised in that** said first layer (7) is in the form of a flattened sheet or plate (7a) of said first plastic material and is inserted in said form into said moulding cavity (2), and **in that** said sheet or plate (7a) is thermoformed to its final shape by said injection-moulding of said second plastic material in said moulding cavity (2).

7. A process as claimed in claim 4, **characterised in that** said third layer (10) is of the same plastic material as the material forming said first layer (7).

8. A membrane for fluid control apparatuses, comprising at least one first layer (7) of a first plastic material chemically resistant to said fluid, and at least one second layer (8) of a second plastic material mainly defining the mechanical performance of the membrane, said layers (7, 8) being integral with each other, wherein said first plastic material is selected from polyolefines, polyamides, polyesters, vinyl resins, and said second plastic material is an elastomer,
**characterised in that** said second layer (8) is made of a thermoplastic elastomer (TPE) adapted to be injection-moulded, said thermoplastic elastomer being joined adhesive-less with said first plastic material of said first layer (7).

9. A membrane as claimed in claim 8, **characterised in that** it further comprises a third layer (10) of a plastic material adapted to be injection moulded, said third layer (10) being joined adhesive-less with said second layer (8) at the side thereof opposite to said first layer (7).

10. A membrane as claimed in claim 9, **characterised in that** said third layer (10) is made of the same plastic material as the plastic material forming said first layer (7).

11. A membrane as claimed in claim 8, **characterised in that** said first layer (7) is made of high density polyethylene (HDPE) with an ultrahigh molecular weight (UHMWPE).

## Patentansprüche

1. Ein Verfahren zur Herstellung einer Membran für Fluid-Beeinflussungsvornchtungen, das jeweils die Schritte der Herstellung von mindestens einer ersten Schicht (7) einer Membran (6) mit einem ersten Kunststoffmaterial umfasst, welches chemisch beständig gegen das genannte Fluid ist, sowie der Herstellung von mindestens einer zweiten Schicht (8) aus einem zweiten Kunststoffmaterial, welches hauptsächlich die mechanische Leistung der genannten Membran (6) bestimmt, und der Herstellung der genannten Schichten (7, 8) einteilig miteinander, wobei das genannte erste Kunststoffmaterial aus Polyolefinen, Polyamiden, Polyestern, Vinylharzen ausgewählt wird und das genannte zweite Kunststoffmaterial ein Elastomer ist,
**dadurch gekennzeichnet, dass** das genannte zweite Kunststoffmaterial ein thermoplastisches Elastomer (TPE) ist, sowie **dadurch**, dass das genannte thermoplastische Elastomer (TPE) direkt auf eine haftmittelfreie Oberfläche des genannten ersten Kunststoffinaterials, das sich jeweils in einem Formraum (2) einer Spritzform (1a, 1b) befindet, gespritzt wird, wodurch mindestens eine zweite Schicht (8) gebildet wird, die jeweils haftmittelfrei mit der genannten ersten Schicht verbunden ist.

2. Ein Verfahren nach Anspruch 1, **dadurch gekennzeichnet, dass** das Spritzgießen des genannten zweiten Kunststoffmaterials bei einer Temperatur durchgeführt wird, die das genannte erste Kunststoffmaterial auf Durchschnittstemperaturen bringt, die sich jeweils der Schmelztemperatur des genannten ersten Kunststoffmaterials nähern und unter dieser liegen.

3. Ein Verfahren nach Anspruch 1 oder 2, **dadurch gekennzeichnet, dass** es einen ersten Schritt des Spritzgießens der genannten ersten Schicht (7) und einen zweiten Schritt des Spritzgießens der genannten zweiten Schicht (7) über die genannte erste Schicht (7) umfasst.

4. Ein Verfahren nach Anspruch 3, **dadurch gekennzeichnet, dass** eine dritte Schicht (10) aus Kunststoffmaterial jeweils direkt auf die genannte zweite Schicht (8) gespritzt wird.

5. Ein Verfahren nach einem oder mehreren der vorhergehenden Ansprüche, **dadurch gekennzeichnet, dass** das genannte erste Kunststoffmaterial Polyäthylen (PE) ist, und zwar vorzugsweise hochdichtes Polyäthylen (HDPE) mit einem ultrahohen Molekulargewicht (UHMWPE).

6. Ein Verfahren nach Anspruch 1, **dadurch gekennzeichnet, dass** die genannte erste Schicht (7) die Form einer abgeflachten Folie oder Platte (7a) des genannten Kunststoffmaterials aufweist und in dieser Form in den genannten Formraum (2) eingegeben wird, sowie **dadurch**, dass die genannte Folie oder Platte (7a) durch Spritzgießen des genannten zweiten Kunststoffmaterials in dem genannten Formraum (2) zu seiner endgültigen Form thermogeformt wird.

7. Ein Verfahren nach Anspruch 4, **dadurch gekennzeichnet, dass** die genannte dritte Schicht (10) jeweils aus dem selben Kunststoffmaterial wie das Material besteht, das die genannte erste Schicht (7) bildet.

8. Eine Membran für Fluid-Beeinflussungsvorrichtungen, die mindestens eine erste Schicht (7) aus einem ersten Kunststoffmaterial umfasst, das chemisch beständig gegen das genannte Fluid ist, und mindestens eine zweite Schicht (8) aus einem zweiten Kunststoffmaterial, das hauptsächlich die mechanische Leistung der Membrane bestimmt, wobei die genannten Schichten (7, 8) miteinander einteilig sind und das genannte erste Kunststoffmaterial jeweils aus Polyolefinen, Polyamiden, Polyestern, Vinylharzen ausgewählt wird, und das genannte zweite Kunststoffinaterial ein Elastomer ist,
**dadurch gekennzeichnet, dass** die genannte zweite Schicht (8) aus einem thermoplastischen Elastomer (TPE) besteht, das so angepasst wurde, dass es gespritzt werden kann, wobei das genannte thermoplastische Elastomer jeweils haftmittelfrei mit dem genannten ersten Kunststoffmaterial der genannten ersten Schicht (7) verbunden wird.

9. Eine Membran nach Anspruch 8, **dadurch gekennzeichnet, dass** sie des weiteren eine dritte Schicht (10) aus einem Kunststoffmaterial umfasst, das so angepasst wurde, dass es gespritzt werden kann, wobei die genannte dritte Schicht (10) jeweils haftmittelfrei mit der genannten zweiten Schicht (8) an deren der genannten ersten Schicht (7) gegenüberliegenden Seite verbunden wird.

10. Eine Membran nach Anspruch 9, **dadurch gekennzeichnet, dass** die genannte dritte Schicht (10) jeweils aus dem selben Kunststoffmaterial wie das Kunststoffmaterial besteht, das die genannte erste Schicht (7) bildet.

11. Eine Membran nach Anspruch 8, **dadurch gekennzeichnet, dass** die genannte erste Schicht (7) aus hochdichtem Polyäthylen (HDPE) mit einem ultrahohen Molekulargewicht (UHMWPE) besteht.

## Revendications

1. Un procédé de fabrication d'une membrane pour dispositifs de contrôle d'un fluide, comprenant les phases de fabriquer au moins une première couche (7) de membrane (6) dans une première matière plastique chimiquement résistante au dit fluide, fabriquer au moins une seconde couche (8) d'une seconde matière plastique renforçant principalement la performance mécanique de la dite membrane (6), et rendant les dites couches (7, 8) partie intégrante l'une de l'autre, où la dite première matière plastique est choisie parmi les résines polyoléfines, polyamides, polyesters, vinyles et la dite seconde matière plastique est un élastomère,
**caractérisé par le fait que** la dite seconde matière plastique est un élastomère thermoplastique (TPE) et que le dit élastomère thermoplastique (TPE) est moulé par injection directement sur une surface sans adhésif de la dite première matière plastique insérée dans une empreinte de moule (2) d'un moule à injection (1a, 1b), formant ainsi au moins une seconde couche (8) assemblée sans adhésif à la dite première couche (7).

2. Un procédé selon la revendication 1, **caractérisé par le fait que** le moulage par injection de la dite seconde matière plastique est exécuté à des températures amenant la dite première matière plastique à des températures moyennes proches de, et inférieures à, la température de fusion de la dite première matière plastique.

3. Un procédé selon la revendication 1 ou 2, **caractérisé par le fait qu'**il comprend une première phase de moulage par injection de la dite première couche (7), et une seconde phase de moulage par injection de la dite seconde couche (8) sur la dite première couche (7).

4. Un procédé selon la revendication 3, **caractérisé par le fait qu'**une troisième couche (10) de matière plastique est moulée par injection directement sur la dite seconde couche (8).

5. Un procédé selon une ou plusieurs des revendications qui précèdent, **caractérisé par le fait que** la dite première matière plastique est du polyéthylène (PE), de préférence un polyéthylène haute densité (HDPE) possédant une masse moléculaire très élevée (UHMWPE).

6. Un procédé selon la revendication 1, **caractérisé par le fait que** la première couche (7) est en forme de feuille aplatie ou lamelle (7a) de la dite première matière plastique et est insérée dans la dite empreinte de moule (2), et que la dite feuille ou lamelle (7a) reçoit à chaud sa forme finale par moulage à injection de la dite seconde matière plastique dans la dite empreinte de moule (2).

7. Un procédé selon la revendication 4 **caractérisé par le fait que** la dite troisième couche (10) est composée de la même matière plastique que la matière composant la dite première couche (7).

8. Une membrane pour dispositifs de contrôle d'un fluide, comprenant au moins une première couche (7) d'une première matière plastique chimiquement résistante au dit fluide, et au moins une seconde couche (8) d'une seconde matière plastique renforçant principalement la performance mécanique de la dite membrane, les dites couches (7, 8) faisant partie intégrante l'une de l'autre, où la dite première matière plastique est choisie parmi les résines polyoléfines, polyamides, polyesters, vinyles et la dite seconde matière plastique est un élastomère,
**caractérisée par le fait que** la seconde couche (8) est fabriquée dans un élastomère thermoplastique (TPE) adapté au moulage par injection, le dit élastomère thermoplastique étant joint sans adhésif à la dite première matière plastique de la dite première couche (7).

9. Une membrane selon la revendication 8, **caractérisée par le fait qu'**elle comprend en outre une troisième couche (10) de matière plastique adaptée au moulage par injection, la dite troisième couche (10) étant jointe sans adhésif à la seconde couche (8) sur son côté opposé à la première couche (7).

10. Une membrane selon la revendication 9, **caractérisée par le fait que** la dite troisième couche (10) est fabriquée dans la même matière plastique que la matière plastique composant la dite première couche (7).

11. Une membrane selon la revendication 8, **caractérisée par le fait que** la dite première couche (7) est fabriquée en propylène haute densité (HDPE) possédant une masse moléculaire très élevée (UHMWPE).
